# EUROPÄISCHE PATENTSCHRIFT

(11) **EP 1 622 796 B1**
(45) Veröffentlichungstag und Bekanntmachung des Hinweises auf die Patenterteilung: **03.01.2007**
(21) Anmeldenummer: 04741473.5
(22) Anmeldetag: 19.04.2004
(51) Int. Cl.: B60R 21/01

(54) **VERFAHREN UND VORRICHTUNGEN ZUR ÜBERTRAGUNG VON DATEN ZWISCHEN EINEM ZENTRALEN STEUERGERÄT EINES INSASSENSCHUTZSYSTEMS IN EINEM FAHRZEUG UND MINDESTENS EINER DEZENTRALEN SENSOREINHEIT**
METHOD AND DEVICES FOR TRANSMITTING DATA BETWEEN A CENTRAL CONTROL DEVICE OF A PASSENGER PROTECTION SYSTEM AND AT LEAST ONE LOCAL SENSOR UNIT
PROCEDE ET DISPOSITIFS DE TRANSMISSION DE DONNEES ENTRE UN APPAREIL DE COMMANDE CENTRAL D'UN SYSTEME DE PROTECTION DES OCCUPANTS D'UN VEHICULE ET AU MOINS UNE UNITE DE CAPTEUR DECENTRALISEE

(30) Priorität: 14.05.2003 DE 10321679
(43) Veröffentlichungstag der Anmeldung: 08.02.2006
(73) Patentinhaber: SIEMENS AKTIENGESELLSCHAFT, 80333 München (DE)
(72) Erfinder: GLASER, Telmo, 93053 Regensburg (DE)
(86) Internationale Anmeldenummer: PCT/EP2004/050561
(87) Internationale Veröffentlichungsnummer: WO 2004/101326

(56) Entgegenhaltungen:
- WO-A-01/81124
- WO-A-02/42123
- DE-A- 19 609 290

## Beschreibung

Verfahren und Vorrichtungen zur Übertragung von Daten zwischen einem zentralen Steuergerät eines Insassenschutzsystems in einem Fahrzeug und mindestens einer dezentralen Sensoreinheit.

Die vorliegende Erfindung betrifft ein Verfahren und zu dessen Durchführung geeignete Vorrichtungen zur Übertragung von Daten zwischen einem zentralen Steuergerät eines Insassenschutzsystems in einem Fahrzeug und mindestens einer dezentralen Sensoreinheit. Die dezentrale Sensoreinheit weist dabei einen Sensor auf, der Sensormessdaten aufnimmt. Die Sensoreinheit kann in einem Normalbetriebsmodus oder in einem Testbetriebsmodus betrieben werden, wobei in einem Normalbetriebsmodus Sensormessdaten übermittelt werden, in einem Testbetriebsmodus jedoch Kenndaten der Sensoreinheit. In beiden Betriebsmodi werden die von der Sensoreinheit übermittelten Daten in Form von binär codierten Datenpaketen übermittelt. Die Sensoreinheit übermittelt die zur Übertragung anstehenden Datenpakete nach einem zuletzt erkannten Synchronisationspuls des Steuergeräts, das solche Synchronisationspulse zur Anforderung von Datenpaketen periodisch ausgibt.

Ein solches Verfahren und dazu geeignete Vorrichtungen sind beispielsweise bekannt aus der deutschen Offenlegungsschrift DE 196 09 290 A1. Dort wird ein Sensormodul (11) beschrieben, das über eine Datenleitung (1a) mit einem Steuergerät (5) verbunden ist. Das Sensormodul (11) umfasst einen beschleunigungsempfindlichen Sensor und übermittelt periodisch alle 500 ps ein aus den Sensormesswerten des Sensors gewonnenes binäres Datenpaket mit Hilfe von modulierten Strompulsen an das Steuergerät (5), sobald es einen Synchronisationsspannungspuls auf der Leitung (1a) erkannt hat (beispielsweise dortige Spalte 1, Zeile 66 bis Spalte 2, Zeile 30, oder Spalte 4, Zeilen 55 bis 62). In einem zweiten, wesentlich langsameren Kommunikationsmodus ist es möglich, Test- und Kenndaten des ausgelagerten Sensormoduls (11) an das Steuergerät (5) zu übermitteln, beispielsweise anfängliche Testdaten des Sensormoduls (11) zur Überprüfung dessen korrekter Funktionsfähigkeit, Identifikationsdaten des Sensormoduls (11) usw. (dortige Spalte 4, Zeile 67 bis Spalte 5, Zeile 13). Die Auslösebereitschaft eines dabei an das Steuergerät (5) angeschlossenen Insassenschutzmittels, beispielsweise eines Seitenairbags, ist zu diesem Zeitpunkt noch nicht erreicht, da sich das Sensormodul (11) noch in einer Hochlaufphase nach Zuschalten der Versorgungsspannung befindet (dortige Spalte 5, Zeilen 3 bis 5).

Für jedes Insassenschutzsystem eines Fahrzeugs ist es äußerst wichtig, dass ein darin enthaltenes Steuergerät sicher unterscheiden kann, ob die mit ihm durch beispielsweise eine Datenleitung verbundene dezentrale Sensoreinheit gerade in einem Testmodus betrieben wird, beispielsweise anfänglich nach Zuschalten ihrer Versorgungsspannung, und deshalb nur Kenndaten übermittelt, beispielsweise Identifikations- oder Testdaten des Sensors bzw. der Elektronik, oder ob sich die Sensoreinheit bereits in ihrem Normalbetriebsmodus befindet, in dem Sensormesswerte übermittelt werden, die ggf. in einem Algorithmus bewertet werden und ggf. Anlass zur Auslösung eines Insassenschutzmittels bei einem erkannten Aufprallunfall des Fahrzeugs geben.

Aufgabe der vorliegenden Erfindung ist es, eine Übertragung von Daten zwischen einem zentralen Steuergerät und mindestens einer dezentralen Sensoreinheit möglichst sicher so auszugestalten, dass nur dafür vorgesehene Signale einer Bewertung durch das zentrale Steuergerät unterworfen werden und anschließend zu einer Auslösung eines an das zentrale Steuergerät angeschlossenen Insassenschutzmittels beitragen können.

Diese Aufgabe wird gelöst durch ein Verfahren, das die Verfahrensschritte gemäß Patentanspruch 1 aufweist.

Weiterhin wird die Aufgabe gelöst durch eine Sensoreinheit gemäß Anspruch 18, ein Steuergerät gemäß Anspruch 19 und eine gemeinsame Anordnung beider gemäß Anspruch 20.

Das erfindungsgemäße Verfahren dient der Übertragung von Daten zwischen einem zentralen Steuergerät eines Insassenschutzsystems in einem Fahrzeug und mindestens einer dezentralen Sensoreinheit. Die dezentrale Sensoreinheit weist einen Sensor auf, der Sensormessdaten aufnimmt. Die Sensoreinheit kann in einem Normalbetriebsmodus oder in einem Testbetriebsmodus betrieben werden, wobei im Normalbetriebsmodus Sensormessdaten übermittelt werden, im Testbetriebsmodus jedoch Kenndaten der ersten Sensoreinheit. In beiden Betriebsmodi werden Daten von der Sensoreinheit in Form von binär codierten Datenpaketen übermittelt, die einzelne Datenbits enthalten. Des Weiteren übermittelt die Sensoreinheit ihre zur Übertragung anstehenden Datenpakete nach einem zuletzt erkannten Synchronisationspuls, welchen das Steuergerät zur Anforderung von Datenpaketen von mindestens einer Sensoreinheit ausgibt.

Erfindungsgemäß fügt die Sensoreinheit den zur Übertragung anstehenden binären Datenbits vor der Übertragung zum zentralen Steuergerät durch Hinzufügen mindestens eines Kennzeichenbits ein Kennzeichen bei. Die Datenpakete, die im Normalmodus übertragen werden, besitzen dabei ein jeweils anderes Kennzeichen als die Datenpakete, die im Testbetriebsmodus übertragen werden. Auf diese Weise können die Datenpakete des Normalbetriebsmodus stets sicher und eindeutig von den Datenpaketen des Testbetriebsmodus unterschieden werden. Auf diese Art kann es in dem zentralen Steuergerät, das die jeweiligen Datenpakete empfängt, nicht zu einer Verwechslung von Datenpaketen aus den beiden unterschiedlichen Betriebsmodi kommen. Dadurch kann es zumindest deshalb nicht zu einer fälschlichen Auslösung eines Insassenschutzmittels, beispielsweise eines Seitenairbags, eines Kopfairbags, eines Gurtstraffers, eines Frontairbags oder ähnlichem in einem Kraftfahrzeug kommen.

Das Verletzungsrisiko für Fahrzeuginsassen wird auf diese Weise um ein Vielfaches reduziert.

Bei einer ersten vorteilhaften Ausgestaltung des erfindungsgemäßen Verfahrens handelt es sich bei dem Kennzeichen eines Datenpakets um eine gerade oder ungerade Parität der einzelnen Datenbits des Datenpakets. Dazu fügt die Sensoreinheit solchen Datenbits, die entweder zur Übermittlung von Sensormesswerten oder von Kenndaten an das zentrale Steuergerät über eine Datenleitung übermittelt werden sollen, ein sog. Paritätsbit hinzu, so dass das zu übertragen Datenpaket aus den zu übertragenden Datenbits und dem Paritätsbit besteht. Soll dem Datenpaket eine sog. gerade Parität zugewiesen werden und weist das Datenpaket ohne das Paritätsbit eine ungerade Anzahl von logischen Einszuständen auf, so wählt die Sensoreinheit für das Datenpaket ein Paritätsbit, das ebenfalls eine logische Eins ausdrückt. Soll andernfalls dem Datenpaket eine sog. ungerade Parität beigegeben werden, so ergänzt die Sensoreinheit die zur Übertragung anstehenden Datenbits um ein Paritätsbit mit dem Inhalt einer logischen Null. Entscheidend für diese vorteilhafte Ausgestaltung des erfindungsgemäßen Verfahrens ist es, dass die übertragenen Datenpakete im Testbetriebsmodus der Sensoreinheit eine andere Parität aufweisen als im Normalbetriebsmodus. Diese Ausgestaltungsform eines erfindungsgemäßen Verfahrens ist deshalb besonders vorteilhaft, da im einfachsten Fall durch Hinzufügen eines einzigen Paritätsbits zu den bereits vorhandenen Datenbits eines zu übertragenden Datenpakets hinzugefügt werden muss und die Verwendung von Paritätsbits in der Datenübertragung schon seit langem gebräuchlich und damit ausreichend erprobt ist.

Für eine vorteilhafte Ausführungsform eines erfindungsgemäßen Verfahrens ist es dabei ohne Belang, ob nun die Datenpakete des Normalmodus eine gerade Parität aufweisen und die des Testmodus eine ungerade Parität aufweisen oder entsprechend jeweils umgekehrt. Durch die feste Zuordnung der Parität zu einem Betriebsmodus ist die Zugehörigkeit von Sensordaten zu jeweils einem Betriebsmodus in beiden Fällen stets gleichermaßen unzweifelhaft, was beispielsweise bei einer Analyse von Sensordaten durch ein an das zentrale Steuergerät angeschlossenes Diagnosegerät von entscheidender Wichtigkeit sein kann.

Eine weitere vorteilhafte Ausführungsform für das Kennzeichen eines Datenpakets einer Sensoreinheit kann aber auch eine charakterisierende Quersumme der Datenbits eines Datenpakets sein. Dabei sind dem jeweiligen Datenpaket vorzugsweise mehrere Quersummenbits hinzugefügt, wobei die charakterisierende Quersumme im Normalbetriebsmodus stets einen anderen Wert aufweist als im Testbetriebsmodus. Beispielsweise wird die binäre Quersumme aus allen zur Übertragung anstehenden Datenbits gebildet und mit diesen Datenbits zusammen innerhalb eines Datenpakets übertragen. Damit sich diese Quersumme im Testbetriebsmodus stets von der Quersumme im Normalbetriebsmodus unterscheidet, wird beispielsweise die binäre Quersumme im Testbetriebsmodus auf den nächsthöheren geraden Binärwert ergänzt, im Normalbetriebsmodus jedoch auf den nächsthöheren ungeraden binären Wert. So würden die zur Übertragung anstehenden Datenbits einer Sensoreinheit 1111111 innerhalb eines Datenpakets im Testbetriebsmodus um eine Quersumme 1000 ergänzt und im Normalbetriebsmodus um eine Quersumme 1001.

Entscheidend für eine vorteilhafte Ausführungsform eines erfindungsgemäßen Verfahrens ist jedoch nicht die genaue Art der Bildung einer charakterisierenden Quersumme, sondern dass die Quersumme im Normalbetriebsmodus stets einen anderen Wert aufweist als im Testbetriebsmodus.

Im allgemeinen werden die oben beschriebenen Paritäts - Bits oder Quersummen - Bits aus Gründen der Übertragungssicherheit mit einem Datenpakt übertragen. Um eine solche Übertragungssi.cherheit auch durch Paritäts-Bits oder Quersummen zu gewährleisten, die sich erfindungsgemäß im Laufe der Zeit ändern können, ist es notwendig, dass die Empfängerseite die zu erwartende Parität oder Quersumme eines empfangenen Datenpakets zu jedem Zeitpunkt der Datenübertragung kennt, um dann bei einer davon abweichenden Parität oder Quersumme einen Fehler der Datenübertragung festzustellen. Vor allem in dem für die Sicherheit von Personen relevanten Anwendungsgebiet der vorliegenden Erfindung ist die eine besonders bevorzugte Anwendung des erfindungsgemäßen Verfahrens.

Vorzugsweise wird die Erfindung deshalb beispielsweise in einem Verfahren angewendet, bei dem sich die dezentrale Sensoreinheit nach Zuschalten einer Versorgungsspannung durch das zentrale Steuergerät zunächst während einer bekannten Initialisierungszeit in einem Initialisierungsmodus befindet, in dem die Elektronik betriebsbereit gemacht wird, anschließend während einer ebenfalls bekannten Testzeit im Testbetriebsmodus und schließlich im Normalbetriebsmodus. Da der Startzeitpunkt und das Ende des Testbetriebsmodus dem zentralen Steuergerät genau bekannt sind, kennt das zentrale Steuergerät zu jeder Zeit auch das zu erwartende Kennzeichen eines empfangenen Datenpakets und kann anhand eines fehlerhaften Kennzeichens eines Datenpakets einen möglichen Fehler bei der Datenübertragung feststellen.

Vorzugsweise dauert die Testzeit bis zum Einsetzen eines erneuten Synchronisationspulses, nachdem im Testbetriebsmodus alle gewünschten Datenpakete übertragen wurden, unabhängig von der tatsächlich verstrichenen Zeit. Da die Übertragung von Datenpaketen durch die Synchronisationspulse des zentralen Steuergeräts veranlasst wird, richtet sich die Länge der Testzeit deshalb im wesentlichen nach der Anzahl der Synchronisationspul.se, die das zentrale Steuergerät an eine Sensoreinheit überträgt. Das zentrale Steuergerät kann auf diese Weise sogar ohne weiteres auf die Ausgabe eines oder mehrerer Synchronisationspulse verzichten und dadurch die Testzeit verlängern, ohne dabei ein Datenpaket zu verlieren, das im Testbetriebsmodus übertragen werden muss. Dies kann zum Beispiel dann notwendig sein, wenn das zentrale Steuergerät unerwartet mehr Zeit für die Erledigung von aufwändigen Rechenvorgängen benötigt.

In den bisherigen Ausführungen wurde nicht näher darauf eingegangen, auf welche Weise bei einem erfindungsgemäßen Verfahren eine Sensoreinheit an das zentrale Steuergerät angeschlossen ist. Ohne Einschränkung darauf ist dies im Allgemeinen eine verbindende elektrische Datenleitung zwischen der Sensoreinheit und dem zentralen Steuergerät wie schon eingangs wurde. Vorzugsweise erfolgt dabei sowohl die Spannungsversorgung einer angeschlossenen Sensoreinheit als auch die Datenübertragung von einer Sensoreinheit zu dem zentralen Steuergerät, beispielsweise mittels modulierter Strompulse, auf nur einer einzigen Datenleitung. Außerdem wird auch der Synchronisationspuls des zentralen Steuergeräts auf dieser Datenleitung ausgegeben, vorzugsweise als Spannungspuls durch Modulation der Versorgungsspannung. Ebenso gut kann jedoch die Datenkommunikation auch über einen Lichtwellenleiter erfolgen. Als Synchronisationspuls kommt in diesem Falle ein kurzer Lichtblitz des zentralen Steuergerätes in Frage. Die nötige Spannungsversorgung könnte dabei weiterhin über eine konventionelle elektrische Zuleitung erfolgen, aber auch mithilfe eines zwischengeschalteten Spannungswandler über eine optische Datenleitung. Denkbar ist auch eine Datenkommunikation, Spannungsversorgung und eine Ausgabe von Synchronisationspulsen über berührungslose Übertragungstechniken, beispielsweise über elektromagnetische Strahlung.

Weiterhin war bisher lediglich vom Anschluss einer Sensoreinheit die Rede. Es ist natürlich auch möglich, mehrere Sensoreinheiten, die durchaus unterschiedliche Sensoren und unterschiedliche Elektronik aufweisen können, an eine Datenleitung anzuschließen. Das bisher ausgeführte und gleichfalls alles nachfolgend beschriebene soll gleichermaßen für alle angeschlossenen Sensoreinheiten gelten können.

Durch elektromagnetische Störfelder, beispielsweise im Bereich von Funkstationen entlang einer Fahrstraße, oder auch durch Schaltvorgänge von im Kraftfahrzeug benachbarten Elektronikeinheiten kann es zu induzierten Spannungspulsen beispielsweise auf der Datenleitung zwischen dem zentralen Steuergerät und einer Sensoreinheit kommen. Damit diese Störungen von einer Sensoreinheit nicht fälschlicherweise als Synchronisationspuls interpretiert werden ist es von Vorteil, dass eine Sensoreinheit einen erneuten Synchronisationspuls erst wieder nach Ablauf einer Sperrzeit beachten darf. Eine solche Sperrzeit beginnt vorteilhafterweise mit dem Zeitpunkt der Erkennung des letzten zu beachtenden Synchronisationspulses und endet unmittelbar vor dem Zeitpunkt des nächsten Synchronisationspulses.

Eine erste Sensoreinheit schickt ihre Daten für gewöhnlich nach entweder einer ersten oder nach einer zweiten Wartezeit bzw. einer beliebigen weiteren Wartezeit nach dem Synchronisationspuls zu dem zentralen Steuergerät. Da das zentrale Steuergerät immer genau weiß, zu welchem Zeitpunkt Datenpakete zu erwarten sind, kann es in der übrigen Zeit mit anderen Aufgaben beschäftigt werden, so dass beispielsweise die Rechenzeit eines Mikrocontrollers in dem zentralen Steuergerät besser ausgenützt werden kann.

Im Sinne einer größeren Übertragungssicherheit kann eine Sensoreinheit ein Datenpaket, das den selben Sensormesswert beinhaltet, sowohl nach der ersten als auch nach der zweiten oder einer weiteren Wartezeit übertragen. Tritt ein Fehler in nur einem Datenpaket auf, beispielsweise eine falsche Parität, so kann ein durch das zentrale Steuergerät erkanntes falsches Datenpaket durch den Wert eines fehlerfrei empfangenen Datenpakets ersetzt werden.

Um eine schnellere Reaktionsgeschwindigkeit des Insassenschutzsystems zu erreichen, kann eine Sensoreinheit jedoch auch aktualisierte Datenpakete sowohl nach der ersten als auch nach der zweiten oder einer weiteren Wartezeit nach einem Synchronisationspuls übertragen. Vorzugsweise beinhalten diese aktualisierten Datenpakete zeitlich aufeinanderfolgende Sensormesswerte. So kann eine Übertragungsrate für aktualisierte Datenpakete von beispielsweise 4 KHz, 6 kHz oder noch mehr erreicht werden, wenngleich die Frequenz der Synchronisationspulse lediglich 2 KHz beträgt.

Von besonderem Vorteil ist es weiterhin, wenn an beispielsweise eine Datenleitung eines zentralen Steuergeräts zwei oder noch mehr dezentrale Sensoreinheiten angeschlossen sind, dass die erste Sensoreinheit ihre Daten nach einer ersten Wartezeit nach dem Synchronisationspuls zur Zentraleinheit schickt, eine zweite ihre Datenpakete nach einer zweiten Wartezeit und eine entsprechend weitere Sensoreinheit ihre Datenpakete nach einer weiteren Wartezeit nach dem Synchronisationspuls. Auf diese Weise wird die verwendete Datenleitung zu einer Busleitung von zwei oder mehr Sensoreinheiten, ohne dass diese auf aufwändige Art und Weise durch das zentrale Steuergerät individuell adressiert zur Abgabe von Sensormesswerten aufgefordert werden müssen.

Weiterhin von Vorteil ist es, dass dem zentralen Steuergerät möglichst zeitnah, idealerweise zeitgleich ermittelte Sensormesswerte jeder angeschlossenen Sensoreinheit zur Verfügung stehen, auch wenn die zugehörigen Datenpakete zu unterschiedlichen Zeitpunkten von den angeschlossenen Sensoreinheiten ausgesandt werden. Beispielsweise kann dadurch ein Sensormesswert einer ersten Sensoreinheit bestätigend als sog. Safing-Sensor für eine zweite, vorzugsweise an dieselbe Datenleitung angeschlossene Sensoreinheit dienen, wobei ein Insassenschutzmittel nur dann ausgelöst wird, wenn sowohl die erste Sensoreinheit als auch die zweite Sensoreinheit ein jeweils ausreichend hohes Sensorsignal an das zentrale Steuergerät mitteilt. Die zeitgleiche Aufnahme von Sensormesswerten kann z. B. dadurch erreicht werden, dass die Messwertaufnahme von den Sensoren innerhalb der Sensoreinheiten bei Erkennen eines Synchronisationspulses oder auch zeitgleich danach erfolgt und die zeitgleich aufgenommenen Sensorwerte bis zu ihrer Weiterleitung an das Steuergerät nach der ersten bzw. zweiten Wartezeit zwischengespeichert werden. Je nach Sensorart und je nach interner Taktung der Sensoreinheiten wird dabei meist keine vollkommene Zeitgleichheit der Sensormesswerte verwirklicht. Insofern ist unter einer Aufnahme von zeitgleichen Sensormesswerten der Ausdruck zeitgleich so zu verstehen, dass die Abtastung der Sensormesswerte durchaus um wenige interne Abtastzyklen unterschiedlich sein kann. Als zeitgleiches Aufnehmen von Sensormesswerten in den Sensoreinheiten kann beispielsweise das annähernd zeitgleiche Digitalisieren von analogen Sensormesswerten angesehen werden.

Eine vorteilhafte Art der Codierung eines Datenpaketes wird in den Unteransprüchen 16 und 17 wiedergegeben.

Eine zur Durchführung des erfindungsgemäßen Verfahrens geeignete Sensoreinheit sowie ein dafür geeignetes Steuergerät und auch eine Anordnung, bestehend aus einer solchen Sensorei.n-heit, einem solchen zentralen Steuergerät und vorzugsweise einer Datenleitung, die diese beiden Vorrichtungen miteinander verbindet, ist jeweils in den unabhängigen Vorrichtungsansprüchen 18, 19 und 20 wiedergegeben.

Die in den Unteransprüchen zum unabhängigen Verfahrensanspruch 1 angegebenen Merkmale stellen vorteilhafte Weiterbildung des erfindungsgemäßen Verfahrens sowohl kumuliert als auch in verschiedentlicher Kombination einzelner Merkmale dar.

Nachfolgend wird die Erfindung anhand von Ausführungsbeispielen erläutert. Es zeigen:
- Figur 1: ein Kraftfahrzeug (1) mit zwei Datenleitungen (PDL, PDL'), die ein erfindungsgemäßes zentrales Steuergerät (ECU) mit jeweils zwei erfindungsgemäßen Sensoreinheiten (S1, S2, S1', S2') verbindet,
- Figur 2: eine Anordnung, bestehend aus einem zentralen Steuergerät (ECU), dass sowohl über eine Masseleitung (GND) als auch über eine Datenleitung/Versorgungsleitung (PDL) mit zwei Sensoreinheiten (S1, S2) verbunden ist,
- Figur 3: den inneren Aufbau einer erfindungsgemäßen Sensoreinheit (S1, S2),
- Figur 4: den inneren Aufbau eines erfindungsgemäßen zentralen Steuergeräts (ECU)
- Figur 5: eine schematische Auftragung des Satellitenstroms (I_{PDL} (S1, S2)) über die Zeit (t) eines manchestercodierten Null-Datenbits und eines manchestercodierten Eins-Datenbits,
- Figur 6: eine schematische Auftragung eines erfindungsgemäßen, strommodulierten Datenpakets über die Zeit (t),
- Figur 7: eine schematische Darstellung des periodischen Spannungshubs (U_{PDL}) durch Synchronisationspulse (Sync) und des Stromhubs (I_{PDL}) durch mindestens eine Sensoreinheit (S1, S2) über die Zeit (t), kurz nach Zuschalten der Versorgungsspannung der Sensoreinheiten (S1, S2),
- Figur 8: die Abfolge der abgegebenen Kenndatenpakete während des Testbetriebsmodus (TM) einer Sensoreinheit (S1, S2), angefordert durch die periodischen Synchronisationspulse (Sync) des zentralen Steuergeräts (ECU),
- Figur 9: eine schematische Darstellung der Parität (P) der übertragenen Datenpakete (DP) einer Sensoreinheit (S1, S2) über die Zeit (t) während der Initialisierungsphase (IP), während der Zeit (tᵢₙᵢ) des Testbetriebsmodus (TM) und während des Normalbetriebsmodus (NM) einer Sensoreinheit (S1, S2),
- Figur 10: eine schematische Darstellung der zeitlichen Abfolge von ersten und zweiten Datenpaketen (DP) einer ersten und/oder zweiten Sensoreinheit (S1, S2) während des Normalbetriebsmodus (NM), wobei die Datenpakete (DP) entweder nach einer ersten Wartezeit (t_{DLY1}) oder nach einer zweiten Wartezeit (t_{DLY2}) ausgesandt werden,
- Figur 11: eine schematische Darstellung einer strommodulierten Datenkommunikation einer Sensoreinheit (S1), wobei innerhalb einer Periodendauer (T_{Sync}) eines Synchronisationspulses (Sync) Datenpakete (DP) der ersten Sensoreinheit (S1) sowohl nach der ersten Wartezeit (t_{DLY1}) als auch nach der zweiten Wartezeit (t_{DLY2}) ausgesandt werden.

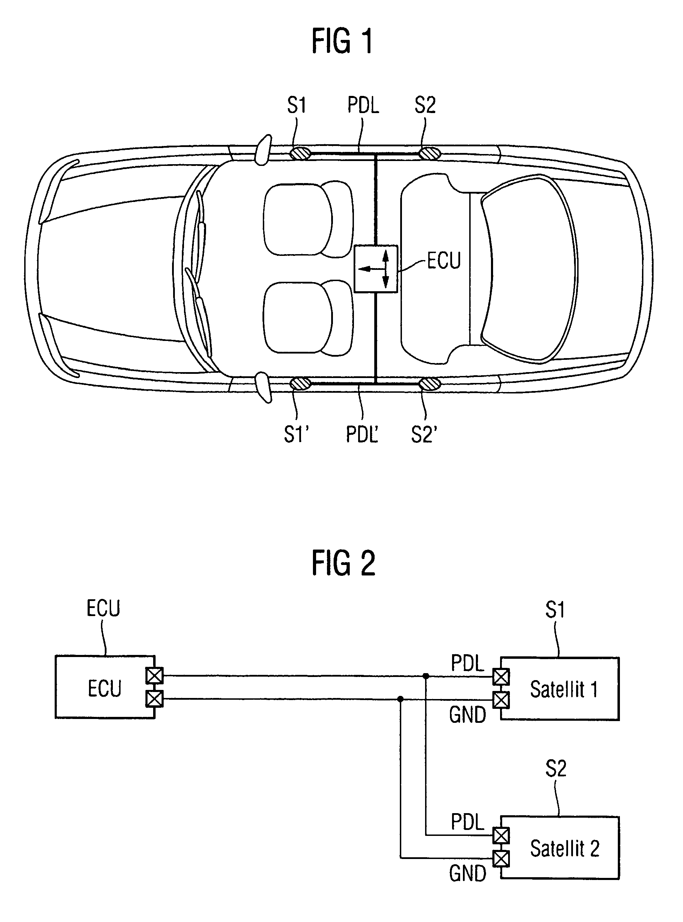

Figur 1 zeigt ein Kraftfahrzeug 1 mit einer erfindungsgemäßen Anordnung S1, PDL, S2, S1', PDL', S2', ECU zur Übertragung von Daten auf einer Datenleitung PDL zwischen einem zentralen Steuergerät ECU und zwei an die gemeinsame Datenleitung PDL angeschlossenen Sensoreinheiten S1 und S2. Weiterhin dargestellt sind in der Figur 1 eine weitere Datenleitung PDL' und weitere Sensoreinheiten S1' und S2', die über die Datenleitung PDL' mit dem zentralen Steuergerät ECU verbunden sind.

Auch Figur 2 zeigt ein zentrales Steuergerät ECU, dass über eine gemeinsame Datenleitung PDI, mit einer ersten und einer zweiten Sensoreinheit S1 bzw. S2 verbunden ist.

Die gemeinsame Datenleitung PDL dient zum einen dazu, periodisch, beispielsweise alle 500 Mikrosekunden, Spannungspulse (Sync) an die Sensoreinheiten S1 und S2 auszugeben, wodurch das zentrale Steuergerät ECU Datenpakete DP von den Sensoreinheiten S1 bzw. S2 anfordert. Zum anderen schickt sowohl die erste Sensoreinheit S1 als auch die zweite Sensoreinheit S2 auf dieser gemeinsamen Datenleitung PDL Datenpakete DP in der Form von Strompulsen, die in einem Testbetriebsmodus der Sensoreinheit Kenn- und Testdaten der Sensoreinheiten S1 bzw. S2 beinhalten oder, während des überwiegend vorliegenden Normalbetriebsmodus der beiden Sensoreinheiten S1 und S2, Sensormesswerte.

Ebenso dargestellt ist eine gemeinsame Masseleitung GND, die das Massepotenzial des zentralen Steuergerätes ECU zu allen angeschlossenen Satelliteneinheiten S1, S2 führt.

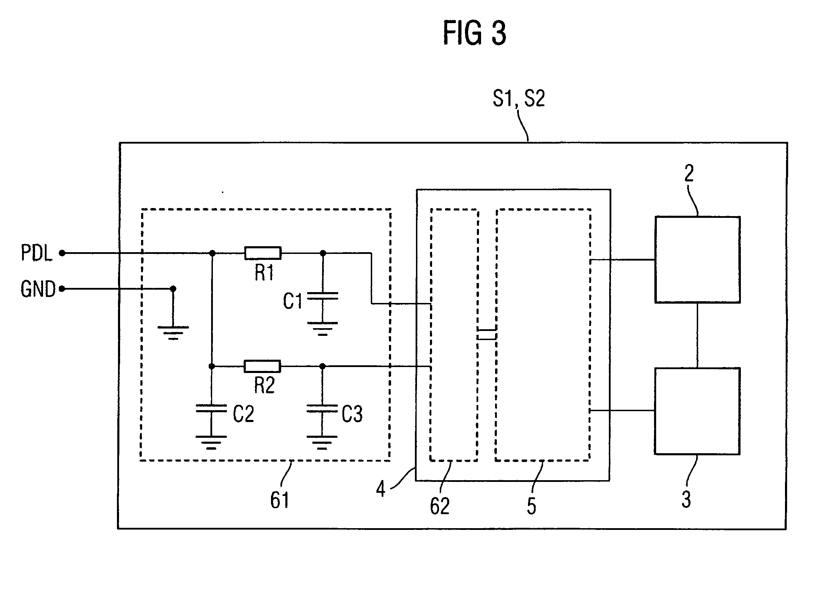

Figur 3 zeigt eine erfindungsgemäße Sensorvorrichtung S1 bzw. S2. Nachfolgend sollen die Merkmale der Sensoreinheit S1 bzw. S2 anhand einer ersten Sensoreinheit S1 beschrieben werden.
Diese Merkmale gelten jedoch selbstverständlich auch für eine erfindungsgemäße zweite Sensoreinheit S2.

Die Sensoreinheit S1 weist einen Sensor 2 auf, beispielsweise einen Beschleunigungssensor 2, bestehend aus einem Halbleiterchips, der ein mikromechanisches Halbleiter - Sensorelement und auf dem selben Halbleiterchip integriert angeordnete signalverarbeitende Halbleiter - Elektronikkomponenten aufweist. Ein geeignetes mikromechanisches Sensorelement sind beispielsweise durch Ätzprozesse im Herstellungsablauf des Halbleiterchips freigelegte, in eine oder mehrere Sensierungsrichtungen bewegliche Massestrukturen, die zusammen mit statischen Chipteilen als Kapazität geschaltet sind. Je nach Richtung und Stärke einer einwirkenden Beschleunigung bewegen sich die Massestrukturen auf unterschiedliche Weise, was sich als Kapazitätsänderung elektrisch abgreifen lässt. Ein geeignetes Sensorelement ist jedoch auch ein Drucksensorelement, bei dem ein freigeätzter Hohlraum im Halbleiterchip durch eine druckdichte Membran aus verbliebenen Halbleitermaterial vom Umgebungsdruck der Atmosphäre druckdicht abgeschlossen wird. Die Halbleitermembran ist nachgiebig gegenüber dem einwirkenden äußeren Luftdruck und kann in gleicher Weise wie bei Beschleunigungsmesszellen zusammen mit starren Chipteilen als Kapazität beschaltet sein, so dass ein sich ändernder äußerer Luftdruck als eine sich ändernde Kapazität der Halbleitermembran im Vergleich zum übrigen Sensorchip gemessen werden kann. Ebenso sind natürlich andere Sensierungsprinzipien und Sensorstrukturen verwendbar, beispielsweise mechanische Beschleunigungsschalter, piezoresistive Druck- oder Beschleunigungssensoren, Drehratensensoren, Kurzschlussschalter oder auch Temperatursensoren, die beispielsweise eine Temperaturerhöhung in einem Hohlraum erfassen können, der während eines Unfallvorgangs komprimiert wird, beispielsweise das Innenvolumen einer Fahrzeugtür. Ebenso bekannt sind außerdem beispielsweise thermische Beschleunigungssensoren der Firma MEMSIC (http://www.memsic.com/memsic/), bei denen Beschleunigungen dadurch erfasst werden, dass erhitzte Luft innerhalb des Sensors durch einwirkende Beschleunigungen näher bzw. weiter zu Temperatursensoren bewegt wird.

Weiterhin in der Figur 3 dargestellt ist ein Speicher 3, in dem Sensorkenndaten gespeichert sind, beispielsweise eine Identifikationsnummer der Sensoreinheit S1, deren Entwicklungsstand oder auch Kalibrierdaten, beispielsweise Umrechnungsformeln des Messbereiches oder ähnliches.

Weiterhin zeigt die Figur 3 eine Sensorsteuereinheit 4, die sowohl eine Sensorrecheneinheit 5 als auch eine Sensorschnittstelle 61, 62 aufweist.

Die Sensorrecheneinheit 5 kann dabei eine anwendungsspezifische integrierte Schaltung, ein sog. ASIC 5, sein, aber auch ein durch Software gesteuerter Mikrocontroller 5. Bei der in der Figur 3 dargestellten Sensorschnittstelle 61, 62 ist ein erster Teil 61 der Sensorschnittstelle 61, 62 in Form einer diskreten Elektronikschaltung aus Widerständen R1, R2 und Kondensatoren C1, C2, C3 aufgebaut, wohingegen ein zweiter Teil 62 innerhalb eines integrierten Bausteins der Sensorsteuereinheit 4 mit der Sensorrecheneinheit 5 integriert ist. Genauso gut könnte jedoch die gesamte Sensorschnittstelle 61, 62 in diskreter Weise auf einer Platine verschaltet sein oder umgekehrt gesamt innerhalb eines Bausteins mit der Sensorsteuereinheit 4 integriert sein. Dies betrifft übrigens auch den Sensor 2, der, anders als dargestellt, ebenso gut innerhalb der Sensorsteuereinheit 4 auf einem gemeinsamen Chip, ggf. sogar mit allen anderen Funktionseinheiten der Sensoreinheit S1 integriert angeordnet sein kann.

An der Datenleitung PDL liegt eine Versorgungsspannung an, die durch das zentrale Steuergerät ECU ausgegeben wird. Ebenso gibt das Steuergerät ECU zur Anforderung von Datenpaketen DP von der Sensoreinheit S1 mittels Spannungsmodulation periodisch Synchronisationspulse Sync auf die Datenleitung PDL aus. Diese werden von der Sensorschnittstelle 61, 62 erkannt.

Die Sensoreinheit S1 ihrerseits übermittelt Datenpakete DP auf der Datenleitung PDL, jedoch nicht in Form von Spannungspulsen, sondern in Form von Strompulsen. Dazu nimmt die Sensorrecheneinheit 5 Sensormesswerte des Sensors 2 auf, beispielsweise analoge Beschleunigungsmesswerte, wandelt das analoge Sensorsignal in ein digitales Signal um und codiert den digitalen Sensormesswert in einer Auflösung, die ihm sowohl durch die Struktur des Sensors, als auch durch Messbereichseinstellungen vorgegeben werden, die üblicherweise im Speicher 2 hinterlegt sind. Außerdem fügt die Recheneinheit 5 den auf diese Weise erzeugten Datenbits DB noch ein Paritätsbit PB hinzu , so dass es einer Empfängereinheit möglich ist, zumindest einfache Bitfehler bei der Datenübertragung zu erkennen. Die genaue Art und Weise der Datencodierung soll weiter unten noch genauer beschrieben werden.

Den bisher beschriebenen Betriebsmodus der Sensoreinheit S1 bezeichnet man als Normalbetriebsmodus NM, da in diesem Betriebsmodus bestimmungsgemäß im Wesentlichen Daten des Sensors 2 an das zentrale Steuergerät ECU weitergegeben werden, die dort einer weiteren Bearbeitung zugeführt werden und ggf. zur Auslösung eines Insassenschutzmittels beitragen.

Ein weiterer Betriebsmodus ist der sog. Testbetriebsmodus TM. In diesem Modus werden zum einen Testdaten in der Sensoreinheit S1 erzeugt, beispielsweise durch eine Auslenkung der mikromechanischen Strukturen des Sensors 2 durch ein elektrisches Feld und ein nachträgliches Abgreifen des dadurch erzeugten Ausgabesignals des Sensors 2 oder durch eine gezielte Einspeisung von bekannten Signalen an Testpunkten innerhalb der elektrischen Schaltung der Sensoreinheit S1, die ein erwartetes Signal hervorrufen. Außerdem werden im Testbetriebsmodus auch Serienkenndaten der Sensoreinheit S1 oder ähnliches an das zentrale Steuergerät ECU übertragen.

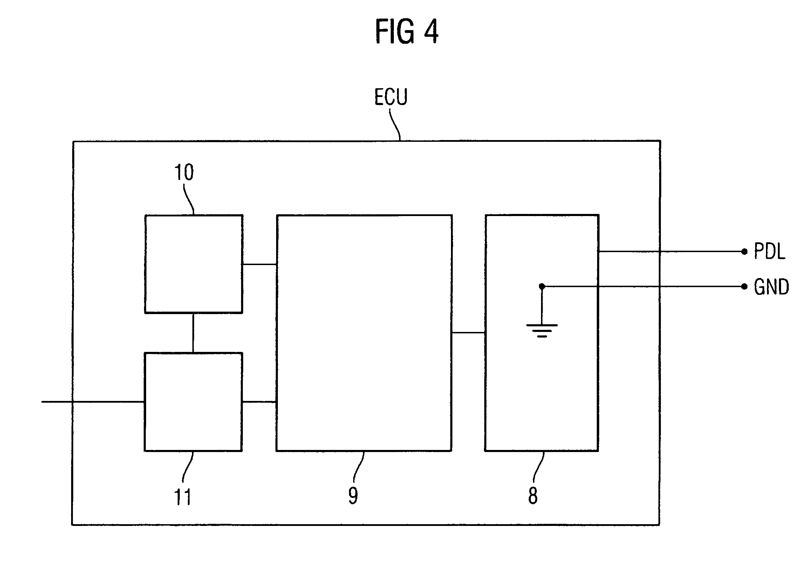

Figur 4 zeigt ein erfindungsgemäßes zentrales Steuergerät ECU, das Datenpakete DP auf der Datenleitung PDL empfängt und soweit elektrisch umsetzt, das die an die Steuergerätschnittstelle 8 angeschlossene Steuergeräterecheneinheit 9 einen in einem Speicher 10 des Steuergeräts ECU und in der Steuergeräterecheneinheit 9 hinterlegten Algorithmus auf die empfangenen Datenpakete DP anwenden kann, um nachfolgend zu entscheiden, ob an eine Auslöseeinheit 11 ein entsprechendes Steuersignal ausgegeben werden muss, so dass die Auslösung eines an die Auslöseeinheit 11 angeschlossenen Insassenschutzmittels ausgegeben wird. Eine Überprüfung der richtigen Kennung eines Datenpakets erfolgt im gezeigten Ausführungsbeispiel in der Steuergeräterecheneinheit ECU.

Im Folgenden wird die binäre Codierung eines Datenpakets näher beschrieben:

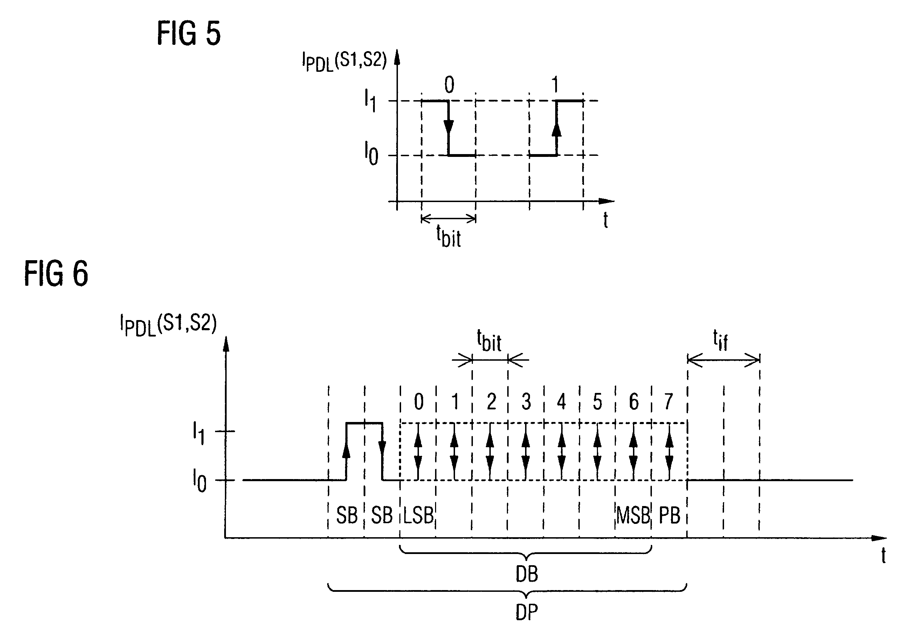

Figur 5 zeigt die Codierungsart eines logischen Null-Zustandes und eines logischen Eins-Zustandes eines Datenbits eines Datenpakets DP der Sensoreinheit S1. Auf der Hochwertachse des Diagramms ist der Stromhub I_{PDL} (S1, S2) dargestellt, der durch die Datenbits eines Datenpakets DP hervorgerufen wird. Bei der vorliegend verwendeten Art der Codierung der Datenbits DB handelt es sich um eine Flankencodierung in der einer möglichen Ausprägung eines Manchestercodes. Der gezeigte Manchestercode stellt ein Null-Bit durch eine fallende Flanke inmitten einer für ein Bit reservierten Bitzeit t_{Bit} dar und entsprechend umgekehrt ein Eins-Bit durch eine steigende Flanke des Stromsignals. Um entsprechend eine Abfolge von Null-Bits oder eine Abfolge von Eins-Bits darzustellen, muss mindestens eine Taktrate zur Datenübertragung vorgesehen werden, deren Periodendauer die Zeitdauer t_{Bit} eines Bits beträgt. Bei einer Bitdauer t_{Bit} von 8 Mikrosekunden ist daher eine Taktrate von mindestens 125 kHz erforderlich. Es ist jedoch auch ein Vielfaches von 125 kHz Taktrate möglich, beispielsweise die häufig genutzte Taktrate innerhalb von Mikrokontrollern von 8 MHz.

Selbstverständlich sind auch andere flankencodierte Datencodierungen möglich, aber auch beliebige andere binäre Datencodierungen, beispielsweise die bekannte NRZ (No Return to Zero) - Codierung.

Figur 6 zeigt ein vollständiges Datenpaket DP in einem Strom-Zeit-Diagramm. Die ersten beiden Bits eines Datenpakets DP sind zwei Startbits SB gemäß einer logischen Abfolge 1 0. Die anschließenden sieben Datenbits von Bit 0 bis Bit 6 stellen die binär codierten Sensormesswerte dar, wobei das erste übertragene Bit das niederwertigste Bit LSB und das letzte übertragende Datenbit 6 das höchstwertige Bit MSB ist. Diese Datenstruktur ist insoweit sowohl im Normalbetriebsmodus NM als auch im Testbetriebsmodus TM gleich.

Erfindungsgemäß unterscheidet sich ein Datenpaket DP im Normalbetriebsmodus NM durch das Paritätsbit PB an der Bitstelle 7 des zu übertragenden Datenpakets DP. Im Normalbetriebsmodus NM wird die Anzahl der sieben Eins - Zustände der Datenbits 0 bis 6 zu einer ungeraden Parität P des Datenpakets DP ergänzt. Im Testbetriebsmodus TM hingegen soll die Anzahl der übertragenen Eins - Zustände innerhalb eines Datenpakets DP immer gerade sein, so dass das Paritätsbit PB die sieben Datenbits 0 bis 6 zu einer positiven Parität P ergänzt.

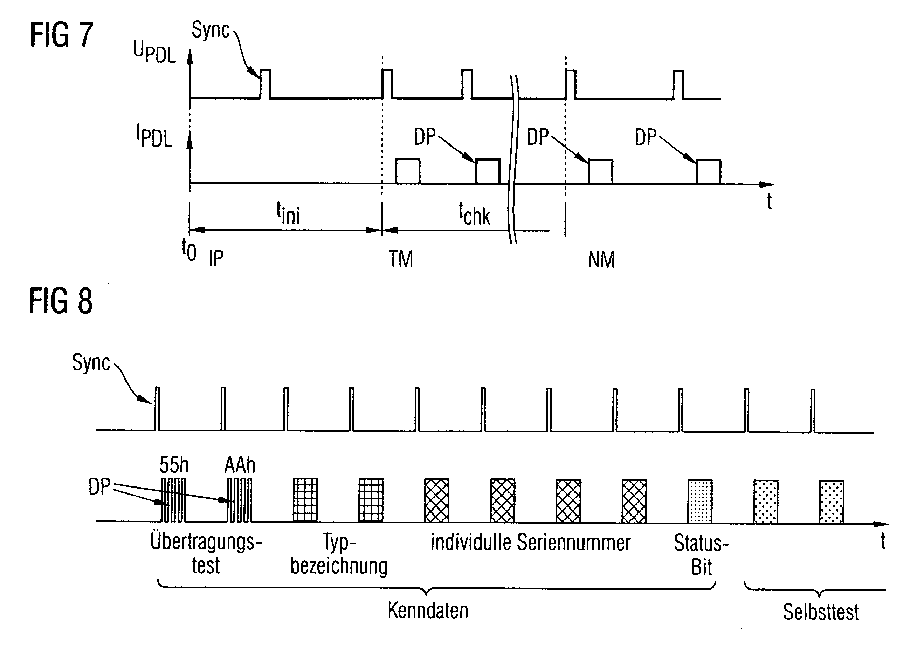

Figur 7 zeigt die zeitliche Abfolge des Testbetriebsmodus TM und des Normalbetriebsmodus NM einer Sensoreinheit S1 nach Zuschalten der Versorgungsspannung. Im oberen Teil des Diagramms sind die periodisch von dem zentralen Steuergerät ECU ausgegebenen Synchronisationspulse Sync über die Zeit t dargestellt, im unteren Teil der Stromhub I_{PDI} über die Zeit t, der zur Übertragung der Datenpakete DP von der Sensoreinheit S1 erzeugt wird.

In einer Initialisierungsphase IP, die eine Zeit tᵢₙᵢ andauert, reagiert die Sensoreinheit S1 nicht auf Synchronisationspulse Sync. Während dieser Hochlaufzeit tᵢₙᵢ werden beispielsweise die Spannungsregler, die Kondensatoren C1 bis C3 und alle weiteren elektronischen Baugruppen innerhalb der Sensorsteuereinheit 4 in Betriebsbereitschaft gebracht, sowie die übrigen Funktionseinheiten der Sensoreinheit S1, beispielsweise der Sensor 2, der Speicher 3, usw.

Nach der Initialisierungszeit tᵢₙᵢ schließt sich der Testbetriebsmodus TM der Sensoreinheit S1 an. In dem Testbetriebsmodus, werden auf die datenauffordernden Synchronisationspulse Sync hin Kenndaten der Sensoreinheit S1 an das zentrale Steuergerät ECU übermittelt. Jede Übertragung von Datenpaketen DP innerhalb des Testbetriebsmodus TM, wie auch später im Normalbetriebsmodus NM, wird eingeleitet durch einen Synchronisationspuls Sync.

Figur 8 zeigt die Art der Kenndaten, die nacheinander während des Testbetriebsmodus TM übertragen werden:

Die ersten beiden Datenpakete DP nach den ersten beiden Synchronisationspulsen Sync sind Datenpakete DP mit vorher bekanntem Inhalt, um die Datenübertragung selbst zu testen, beispielsweise die in Hexadezimaldarstellung gezeigten Werte 55h und AAh. Daran anschließend werden zwei Datenpakete DP übertragen, deren Inhalt Auskunft über die Art des verwendeten Sensors, dessen Empfindlichkeit, dessen Ausgabebereich und des Serienstands der Elektronikschaltung der Sensoreinheit S1 gibt. Die nächsten vier Datenpakete DP beinhalten die Seriennummer der Sensoreinheit S1. Da ein Datenpaket sieben Datenbits aufweist, können durch diese vier Datenpakete DP Seriennummern von 0 bis 268 x 10⁶ dargestellt werden. Daran anschließend folgt ein Datenpaket DP, das den Status der angeschlossenen Sensoreinheit S1 ausdrückt. Auf diese Weise wird beispielsweise eine korrekte Funktionsfähigkeit der Sensoreinheit S1 anzeigt oder auch einer von mehreren Fehlercodes übermittelt. Im später ablaufenden Normalbetriebsmodus werden hingegen aufgrund der begrenzten Auflösung eines Datenpakets durch nur sieben Datenbits DB mehrere Fehlercodes zu einer einzigen Fehlermeldung 1111111 zusammengefasst.

Nun folgt ein Selbsttest der Sensoreinheit S1, beispielsweise ein Selbsttest des Sensors 2 wie bereits weiter oben beschrieben wurde. Die Ergebnisse dieses Selbsttests werden in der Form von aufeinanderfolgenden Datenpaketen DP übermittelt, die vom zentralen Steuergerät ECU durch Synchronisationspulse Sync angefordert werden.

Wie aus Figur 7 zu sehen, beginnt der Testbetriebsmodus TM nach Ablauf der Hochlaufzeit tᵢₙᵢ und endet nach dem Ablauf der Testzeit t_{chk}. Die Zeit t_{chk} dauert bis zum Einsetzen eines erneuten Synchronisationspulses, nachdem im Testbetriebsmodus TM alle gewünschten Datenpakete DP übertragen wurden, im vorliegenden Ausführungsbeispiel 201 Datenpakete.

An den Testbetriebsmodus TM schließt sich der Normalbetriebsmodus NM der Sensoreinheit S1 an, in dem in der bereits bekannten Weise nach jedem Synchronisationspuls Sync Sensormesswerte in Form von Datenpaketen DP an das zentrale Steuergerät ECU übertragen werden.

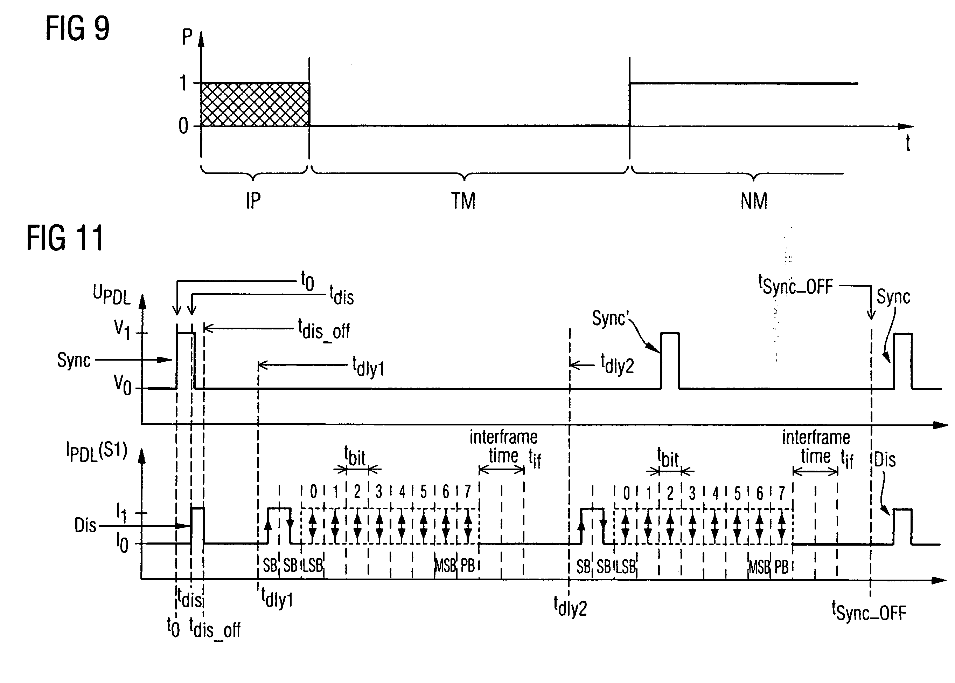

Figur 9 zeigt in einem Diagramm den Zustand der Parität P der von der Sensoreinheit S1 abgegebenen Datenpakete DP während der beiden beschriebenen Betriebsmodi und der anfänglichen Initialisierungsphase IP. Hochwertig ist die Parität aufgetragen, auf der Rechtswertachse die Zeit. Der im Diagramm gezeigte Wert 1 der Parität P stellt in Anlehnung an eine logische Eins eine ungerade Parität P dar, der Wert 0 drückt in Anlehnung an eine logische Null eine gerade Parität P aus. In der Initialisierungsphase IP der Sensoreinheit S1 ist die Parität P unbestimmt, da auch keine Datenpakete DP an das zentrale Steuergerät ECU übertragen werden und deshalb die Datenübertragungssicherheit keine Rolle spielt. Im Testbetriebsmodus TM ist die Parität P der übertragenen Datenpakete DP gerade, 0, und wechselt mit dem ersten übertragenen Datenpaket DP im Normalbetriebsmodus NM der Sensoreinheit S1 auf eine ungerade Parität P, 1.

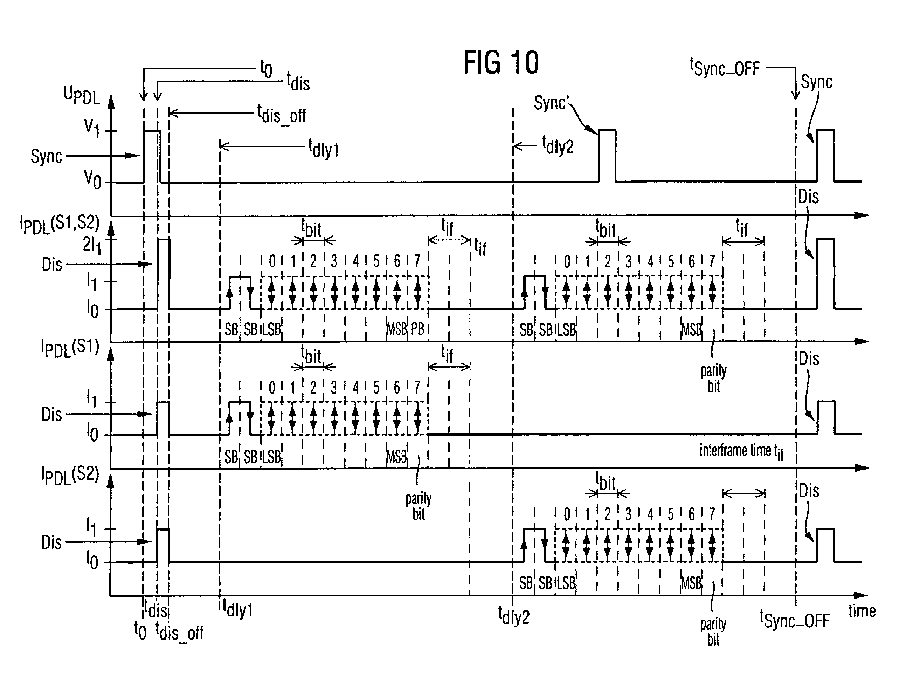

Figur 10 zeigt, jeweils über die gleiche Zeitachse aufgetragen, im Fall des obersten Diagramms eine Abfolge von zwei periodischen Synchronisationspulsen Sync und einem falschen Synchronisationspuls Sync'. Im zweiten Diagramm von oben ist hochwertig der Strom I_{PDL} (S1, S2) aufgetragen, der erzeugt wird, wenn zwei Sensoreinheiten S1 und S2 an eine Datenleitung PDL angeschlossen sind, wie bereits in Figur 2 dargestellt. Nach einer ersten Wartezeit t_{dly1} nach Einsetzen des Synchronisationspulses Sync wird, jeweils beginnend mit den zwei Startbits SB, das Datenpaket DP der ersten Sensoreinheit S1 ausgegeben, nach einer zweiten Wartezeit t_{dly2} das Datenpaket DP der zweiten Sensoreinheit S2. Der beispielsweise durch eine elektromagnetische Störung auf die gemeinsame Datenleitung PDL induzierte falsche Synchronisationspuls Sync' leitet weder eine Übertragung eines Datenpaketes DP von der Sensoreinheit S1 noch von der Sensoreinheit S2 ein, da die Signalausgabe beider bis zum Ablauf einer Sperrzeit t_{Sync_off} nach dem zuletzt erkannten gültigen Synchronisationspuls Sync gesperrt ist.

Um beispielsweise einer ungewollten Aufladung des Eingangsnetzwerks R1, C1, R2, C2, C3 des ersten Teils 61 der Sensorschnittstelle 61, 62 entgegenzuwirken, die durch den Synchronisationspuls Sync verursacht wird, erfolgt nach einer Entladungssperrzeit t_{dis} ein kurzer Entladepuls Dis durch beide Sensoreinheiten S1 und S2 mit einer doppelten Stromamplitude eines Datenbits DB. Das dritte und das vierte Diagramm von oben zeigt den Stromsignalhub I_{PDL} (S1) und I_{PDL}(S2) der durch nur eine Sensoreinheit S1 bzw. S2 hervorgerufen wird, wobei die Datenausgabe der ersten Sensoreinheit S1 nach der ersten Sperrzeit t_{dly1} erfolgt, jedoch die Datenausgabe der zweiten Sensoreinheit nach der zweiten Sperrzeit t_{dly2} erfolgt. Entsprechend ist in beiden Fällen auch lediglich ein Entladungspuls Dis ausreichend, der lediglich eine Stromamplitude eines Datenbits DB aufweist.

Es ist auch möglich nur eine Sensoreinheit S1 oder S2 an die Datenleitung PDL anzuschließen, jedoch Datenpakete DP dieser einen Sensoreinheit S1, S2 sowohl nach der ersten Sperrzeit t_{DLY1} als auch nach der zweiten Sperrzeit t_{DLY2} auszusenden. Dies ist vor allem dann von Vorteil, wenn man eine starke Störung der Signale auf der Datenleitung PDL erwartet und man dennoch durch eine redundante Übertragung durch Datenpakete DP gleichen Informationsgehaltes eine falsch übertragene Information erkennen und korrigieren möchte.

Alternativ ist es jedoch auch möglich, jeweils aktuellste Sensorwerte in den aufeinanderfolgenden Datenpaketen DP zu übertragen, so dass beispielsweise anstatt einer Datenübertragungsrate von 2 KHz, die vorgegeben wird durch die Pulsperiodendauer der periodischen Synchronisationspulse (Sync) des zentralen Steuergeräts ECU, eine effektive Übertragungsrate von 4 KHz erreichen kann.

## Patentansprüche

1. Verfahren zur Übertragung von Daten zwischen einem zentralen Steuergerät (ECU) eines Insassenschutzsystems in einem Fahrzeug (1) und mindestens einer dezentralen Sensoreinheit (S1, S2), die einen Messdaten aufnehmenden Sensor (2) umfasst, wobei die Sensoreinheiten (S1, S2) in einem Normalbetriebsmodus (NM) oder in einem Testbetriebsmodus (TM) betrieben wird, wobei im Normalbetriebsmodus (NM) die übermittelten Daten Sensormessdaten beinhalten, wohingegen sie im Testbetriebsmodus (TM) Kenndaten der Sensoreinheit (S1, S2) beinhalten, und wobei in jedem der beiden Betriebsmodi
- Daten von der Sensoreinheit (S1, S2) als Datenpakete (DP) aus einzelnen Datenbits übermittelt werden;
- das zentrale Steuergerät (ECU) zur Anforderung von Datenpaketen (DP) periodisch Synchronisationspulse (Sync) ausgibt; und
- die Sensoreinheit(en) (S1, S2) ihre jeweils zur Übertragung anstehenden Datenpakete (DP) stets nach dem letzten Synchronisationspuls (Sync) an das Steuergerät (ECU) sendet,
**dadurch gekennzeichnet, dass**
- die Sensoreinheit (S1, S2) den zur Übertragung anstehenden Datenbits (DB) vor der Übertragung zum zentralen Steuergerät (ECU) durch Hinzufügen mindestens eines Kennzeichenbits (PB) ein Kennzeichen beifügt; und
- die Datenpakete (DP) im Normalbetriebsmodus (NM) jeweils ein anderes Kennzeichen aufweisen als im Testbetriebsmodus (TM);
so dass die Datenpakete (DP) des Normalbetriebsmodus (NM) und des Testbetriebsmodus (TM) anhand des jeweiligen Kennzeichens eindeutig voneinander unterschieden werden können.

2. Verfahren nach Anspruch 1,
**dadurch gekennzeichnet, dass**
- das Kennzeichen eines Datenpakets dessen Parität (P) ist; und
- die Parität (P) dem jeweiligen Datenpaket (DP) vorzugsweise durch Hinzufügen eines Paritäts-Bits (PB) beigefügt wird;
so dass je nach logischem Zustand des hinzugefügten Paritätsbits (PB) die Anzahl der logischen Einsen unter den Datenbits (DB) in einem Datenpaket (DP) auf eine gerade Zahl zu einer geraden Parität (P) des Datenpakets (DP) ergänzt wird oder zu einer ungeraden Zahl auf eine ungerade Parität (P) und die Datenpakete (DP) im Normalbetriebsmodus (NM) eine andere Parität aufweisen als im Testbetriebsmodus (TM).

3. Verfahren nach Anspruch 2,
**dadurch gekennzeichnet, dass**
- die Datenpakete (DP) im Normalbetriebsmodus (NM) eine ungerade Parität (P) aufweisen; und
- die Datenpakete (DP) im Testbetriebsmodus (TM) eine gerade Parität (P) aufweisen.

4. Verfahren nach Anspruch 1,
**dadurch gekennzeichnet, dass**
das Kennzeichen eines jeweiligen Datenpakets eine charakterisierende Quersumme (Checksum) ist, die dem jeweiligen Datenpaket (DP) vorzugsweise durch Hinzufügen mehrerer Quersummen
- Bits (CB) beigefügt wird, wobei die charakterisierende Quersumme (Checksum) im Normalbetriebsmodus (NM) stets einen anderen Wert aufweist als im Testbetriebsmodus (TM).

5. Verfahren nach einem der Ansprüche 1 bis 4,
**dadurch gekennzeichnet, dass** die Sensoreinheit(en) (S1, S2) nach einem Zuschalten ihrer Versorgungsspannung durch das zentrale Steuergerät (ECU)
- erst nach Ablauf einer Initialisierungszeit (tᵢₙᵢ) auf die datenanfordernden Synchronisationspulse (Sync) des zentralen Steuergeräts (ECU) hin Datenpakete (DP) versendet,
- nach Ablauf der Initialisierungszeit (tᵢₙᵢ) während einer Testzeit (t_{chk}) in dem Testbetriebsmodus (TM) betrieben wird, wobei die Testzeit (t_{chk}) so lange andauert bis eine vorher festgelegte Anzahl von Datenpaketen (DP) übermittelt worden ist ; und
- erst nach Ablauf der Testzeit (t_{chk}) im Normalbetriebsmodus (NM) betrieben wird.

6. Verfahren nach einem der Ansprüche 1 bis 5,
**dadurch gekennzeichnet, dass**
- die Spannungsversorgung der Sensorei.nheit(en) (S1, S2) und die Datenübertragung auf nur einer einzigen elektrischen Datenleitung (PDL) erfolgt und
- das zentrale Steuergerät (ECU) zur Anforderung von Datenpaketen (DP) periodisch Synchronisationspulse (Sync) durch Modulation der Versorgungsspannung auf die eine Datenleitung (PDL) ausgibt.

7. Verfahren nach einem der Ansprüche 1 bis 6,
**dadurch gekennzeichnet, dass**
eine weitere Ausgabe von Datenpaketen (DP) der Sensoreinheit (S1) durch einen erneuten Synchronisationspuls (Sync) erst wieder nach einer Sperrzeit (t_{off}) veranlasst werden kann, die mit dem zuletzt erkannten Synchronisationspuls (Sync) beginnt und unmittelbar vor dem nächsten Synchronisationspuls (Sync) endet.

8. Verfahren nach einem der Ansprüche 1 bis 7,
**dadurch gekennzeichnet, dass**
ein erstes Datenpaket einer dezentralen Sensoreinheit (S1) innerhalb einer Periodendauer (T₂) der periodisch wiederkehrenden Synchronisationspulse (Sync) nach einer ersten Wartezeit (t_{dly1}) nach dem Synchronisationspuls (Sync) zum zentralen Steuergerät (ECU) geschickt wird.

9. Verfahren nach einem der Ansprüche 1 bis 8,
**dadurch gekennzeichnet, dass**
ein zweites Datenpaket einer dezentralen Sensoreinheit (S1) innerhalb einer Periodendauer (T₂) der periodisch wiederkehrenden Synchronisationspulse (Sync) nach einer zweiten Wartezeit (t_{dly2}) nach dem Synchronisationspuls (Sync) zum zentralen Steuergerät (S) geschickt wird und gegebenenfalls weitere Datenpakete (DP) nach entsprechend weiteren Wartezeiten.

10. Verfahren nach Anspruch 8 und 9,
**dadurch gekennzeichnet, dass**
das erste und das zweite Datenpaket (DP) und gegebenenfalls weitere Datenpakete (DP) einer Sensoreinheit (S1, S2) jeweils einen Wert übertragen, der von demselben Sensormesswert abgeleitet ist.

11. Verfahren nach einem der Ansprüche 8 oder 9,
**dadurch gekennzeichnet, dass**
das erste und das zweite Datenpaket (DP) und gegebenenfalls weitere Datenpakete (DP) einer Sensoreinheit (S1) Werte übertragen, die von jeweils unterschiedlichen Sensormesswerten abgeleitet sind, vorzugsweise von zwei oder mehreren zeitlich aufeinanderfolgend vorliegenden Sensormesswerten.

12. Verfahren nach Anspruch 11,
**dadurch gekennzeichnet, dass**
jedes Datenpaket (DP) mehrerer an die Datenleitung angeschlossener dezentralen Sensoreinheiten (S1, S2) erst nach einer jeweils unterschiedlichen Wartezeit (t_{dly1}, t_{dly2}) nach dem Synchronisationspuls (Sync) zum zentralen Steuergerät (ECU) geschickt wird.

13. Verfahren nach Anspruch 12,
**dadurch gekennzeichnet, dass**
die Sensoreinheiten (S1, S2) ihre Sensormesswerte durch den Synchronisationspuls (Sync) veranlasst von ihrem jeweiligen Sensor aufnehmen, so dass die in den Datenpaketen (DP) verschiedener Sensoreinheiten (S1, S2) übermittelten jeweiligen Sensormesswerte im Rahmen der Messtoleranz jeweils zur gleichen Zeit aufgenommen werden.

14. Verfahren nach Anspruch 13,
**dadurch gekennzeichnet, dass**
das Auslesen der Sensorwerte durch ein Digitalisieren von analog vorliegenden Sensormesswerten erfolgt.

15. Verfahren nach einem der Ansprüche 1 bis 14,
**dadurch gekennzeichnet, dass** die Datenbits der übermittelten Datenpakete (DP) flankencodi.ert werden, vorzugsweise manchestercodiert.

16. Verfahren nach einem der Ansprüche 1 bis 15,
**dadurch gekennzeichnet, dass**
ein Datenpaket (DP) im Normalmodusbetrieb und/oder im Testbetriebsmodus folgendes Bitmuster aufweist:
- 7 Datenbits (DB) zur Übermittlung der Sensormesswerte oder Sensorkennwerte;
- 2 Startbits (SB); und
- das Paritätsbit (PB).

17. Sensoreinheit (S1, S2) eines Insassenschutzsystems in einem Fahrzeug (1) zum Erfassen von Sensormesswerten und zur Übertragung der Sensormesswerte zu einem zentralen Steuergerät (ECU) gemäß einem Verfahren der Ansprüche 1 bis 16, die einen Sensor (2), einen Speicher (3), eine Sensorsteuereinheit (4), eine Sensorrecheneinheit (5) und eine Sensorschnittstelle (61, 62) aufweist, wobei die Sensorsteuereinheit (4) oder/und die Sensorrecheneinheit (5) zur Veranlassung der Ausgabe des richtigen Kennzeichens eines Datenpakets DP in jedem Betriebsmodus der Sensoreinheit (S1, S2) geeignet ist.

18. Zentrales Steuergerät (ECU) für den Einsatz in einem Verfahren zur Übertragung von Daten gemäß einem der Ansprüche 1 bis 16 mit einer Steuergeräteschnittstelle (8), einer Steuergeräterecheneinheit (9) und einem Steuergerätespeicher (10), wobei durch die Steuergeräteschnittstelle (8),
- eine Versorgungsspannung für mindestens eine Sensoreinheit (S1, S2) gemäß Anspruch 17 ausgebbar ist;
- zur Anforderung von Datenpaketen (DP) von der mindestens einen Sensoreinheit (S1, S2) periodisch Synchronisationspulse (Sync) ausgebbar sind; und
- als Strompulse übertragene Datenpakete (DP) empfangbar sind;
und wobei die Steuergeräterecheneinheit (5) zur Erkennung des richtigen Kennzeichens eines Datenpakets DP geeignet ist.

19. Anordnung, die für den Ablauf eines Verfahrens zur Übertragung von Daten gemäß einem der Ansprüche 1 bis 16 einsetzbar ist und die sowohl eine Sensoreinheit (S1, S2) gemäß Anspruch 17 umfasst als auch ein zentrales Steuergerät (ECU) gemäß Anspruch 18.

## Claims

1. Method for transmitting data between a central control device (ECU) of a passenger protection system in a vehicle (1) and at least one decentralised sensor unit (S1, S2) which includes a sensor (2) that records sensor (2) measurement data, wherein the sensor units (S1, S2) are operated in a normal operating mode (NM) or in a test operating mode (TM), wherein the transferred data contains sensor measurement data in the normal operating mode (NM) whereas it contains characteristic data of the sensor unit (S1, S2) in the test operating mode (TM), and wherein in both of the operating modes
- data is transferred from the sensor unit (S1, S2) as data packets comprising individual data bits;
- the central control device (ECU) periodically outputs synchronisation pulses (Sync) in order to request data packets (DP); and
- the sensor unit(s) (S1, S2) always sends its data packets (DP) which are in each case awaiting transmission to the control device (ECU) after the most recent synchronisation pulse (Sync),
**characterised in that**
- the sensor unit (S1, S2) appends an identifier to the data bits (DB) which are awaiting transmission by adding at least one identifier bit (PB) before the transmission to the central control device (ECU); and
- the data packets (DP) in the normal operating mode (NM) have a different identifier in each case than in the test operating mode (TM);
such that the data packets (DP) of the normal operating mode (NM) and of the test operating mode (TM) can be clearly distinguished from each other on the basis of the relevant identifier.

2. Method as claimed in claim 1,
**characterised in that**
- the identifier of a data packet is its parity (P); and
- the parity (P) is preferably appended to the relevant data packet (DP) by adding a parity bit (PB);
such that depending on the logical state of the added parity bit (PB), the number of logical ones among the data bits (DB) in a data packet (DP) is increased to an even number in order to form an even parity (P) of the data packet (DP), or to an odd number in order to form an odd parity (P), and the data packets (DP) in the normal operating mode (NM) have a different parity than in the test operating mode (TM).

3. Method as claimed in claim 2,
**characterised in that**
- the data packets (DP) in the normal operating mode (NM) have an odd parity (P); and
- the data packets (DP) in the test operating mode (TM) have an even parity (P).

4. Method as claimed in claim 1,
**characterised in that**
the identifier of a relevant data packet is a characterising checksum (Checksum) which is preferably appended to the relevant data packet (DP) by adding a plurality of checksum bits (CB), wherein the characterising checksum (Checksum) in the normal operating mode (NM) always has a different value than in the test operating mode (TM).

5. Method as claimed in one of the claims 1 to 4, **characterised in that** after a switching on of its supply voltage by the central control device (ECU), the sensor unit(s) (S1, S2)
- does not send data packets (DP) in response to the data-requesting synchronisation pulses (Sync) of the central control device (ECU) until after expiry of an initialisation time (tᵢₙᵢ),
- is operated in the test operating mode (TM) during a test time (t_{chk}) after expiry of the initialisation time (tᵢₙᵢ), wherein the test time (t_{chk}) lasts until a predetermined number of data packets (DP) has been transferred; and
- is not operated in the normal operating mode (NM) until after expiry of the test time (t_{chk}).

6. Method as claimed in one of the claims 1 to 5,
**characterised in that**
- the voltage supply of the sensor unit(s) (S1, S2) and the data transmission occur on a single electrical data line (PDL) and
- the central control device (ECU) periodically outputs synchronisation pulses (Sync) by modulating the supply voltage on the single data line (PDL) in order to request data packets (DP).

7. Method as claimed in one of the claims 1 to 6,
**characterised in that**
a further output of data packets (DP) of the sensor unit (S1) cannot be initiated by a new synchronisation pulse (Sync) until after an off-period (t_{off}), which begins with the most recently detected synchronisation pulse (Sync) and ends immediately before the next synchronisation pulse (Sync).

8. Method as claimed in one of the claims 1 to 7,
**characterised in that**
a first data packet of a decentralised sensor unit (S1) is sent to the central control device (ECU) after a first delay (t_{dly1}) after the synchronisation pulse (Sync) within a period duration (T₂) of the periodically recurring synchronisation pulses (Sync).

9. Method as claimed in one of the claims 1 to 8,
**characterised in that**
a second data packet of a decentralised sensor unit (S1) is sent to the central control device (S) after a second delay (t_{dly2}) after the synchronisation pulse (Sync) within a period duration (T₂) of the periodically recurring synchronisation pulses (Sync), and possibly further data packets (DP) after corresponding further delays.

10. Method as claimed in claims 8 and 9,
**characterised in that**
the first and the second data packet (DP) and possibly further data packets (DP) of a sensor unit (S1, S2) transmit a value in each case which is derived from the same sensor measured value.

11. Method as claimed in one of the claims 8 or 9,
**characterised in that**
the first and the second data packet (DP) and possibly further data packets (DP) of a sensor unit (S1) transmit values which are derived from different sensor measured values in each case, preferably from two or more sensor measured values which are chronologically sequential.

12. Method as claimed in claim 11,
**characterised in that**
each data packet (DP) of a plurality of decentralised sensor units (S1, S2) which are connected to the data line is not sent to the central control device (ECU) until after a delay (t_{dly1}, t_{dly2}) after the synchronisation pulse (Sync), said delay being variable in each case.

13. Method as claimed in claim 12,
**characterised in that**
the sensor units (S1, S2) are triggered by the synchronisation pulse (Sync) to record their sensor values from their relevant sensor, such that the relevant sensor measured values which are transferred in the data packets (DP) of different sensor units (S1, S2) are recorded at the same time in each case within the bounds of the measuring tolerance.

14. Method as claimed in claim 13,
**characterised in that**
the readout of the sensor values is done by digitising sensor measured values which are present in analogue form.

15. Method as claimed in one of the claims 1 to 14,
**characterised in that**
the data bits of the transferred data packets (DP) are edge-encoded, and preferably Manchester-encoded.

16. Method as claimed in one of the claims 1 to 15,
**characterised in that**
a data packet (DP) in the normal operating mode and/or in the test operating mode has the following bit pattern:
- 7 data bits (DB) for transferring the sensor measured values or sensor characteristic values;
- 2 start bits (SB); and
- the parity bit (PB).

17. A sensor unit (S1, S2) of a passenger protection system in a vehicle (1), for capturing sensor measured values and for transmitting the sensor measured values to a central control device (ECU) in accordance with a method as claimed in the claims 1 to 16, having a sensor (2), a memory (3), a sensor control unit (4), a sensor computing unit (5) and a sensor interface (61, 62), wherein the sensor control unit (4) or/and the sensor computing unit (5) is suitable for initiating the output of the correct identifier of a data packet DP in each operating mode of the sensor unit (S1, S2).

18. A central control device (ECU) for use in a method for transmitting data in accordance with one of the claims 1 to 16, having a control device interface (8), a control device computing unit (9) and a control device memory (10), wherein by virtue of the control device interface (8):
- a supply voltage can be output for at least one sensor unit (S1, S2) in accordance with claim 17;
- synchronisation pulses (Sync) can be output periodically for requesting data packets (DP) from the sensor unit (S1, S2), of which there is at least one;
- data packets (DP) which are transmitted as current pulses can be received; and wherein the sensor computing unit (5) is suitable for recognising the correct identifier of a data packet (DP).

19. An arrangement which can be used for the execution of a method for transmitting data in accordance with one of the claims 1 to 16, and which comprises both a sensor unit (S1, S2) in accordance with claim 17 and a central control device (ECU) in accordance with claim 18.

## Revendications

1. Procédé pour la transmission de données entre un appareil de commande central (ECU) d'un système de protection des passagers dans un véhicule (1) et au moins une unité de détection (S1, S2) décentralisée, qui comprend un capteur (2) enregistrant des données de mesure, les unités de détection (S1, S2) étant exploitées dans un mode de service normal (NM) ou dans un mode de service test (TM), les données transmises contenant des données de mesure de capteur dans le mode de service normal (TM), alors qu'elles contiennent des données caractéristiques de l'unité de détection (S1, S2) dans le mode de service test (TM), et dans chacun des deux modes de service,
- des données sont transmises par l'unité de détection (S1, S2) sous la forme de paquets de données (DP) constitués de bits de données individuels ;
- l'appareil de commande central (ECU) émet périodiquement des impulsions de synchronisation (Sync) pour la demande de paquets de données (DP) ; et
- la (les) unité(s) de détection (S1, S2) envoyant leurs paquets de données (DP) respectivement prêtes pour la transmission toujours après la dernière impulsion de synchronisation (Sync) à l'appareil de commande (ECU),
**caractérisé en ce que**
- l'unité de détection (S1, S2) joint un indicateur aux bits de données (DB) prêts pour la transmission avant la transmission à l'appareil de commande central (ECU) par l'ajout d'au moins un bit indicateur (PB) ; et
- les paquets de données (DP) présentent dans le mode de service normal (NM) respectivement un autre indicateur que dans le mode de service test (TM) ;
de sorte que les paquets de données (DP) du mode de service normal (NM) et du mode de service test (TM) peuvent être différenciés les uns des autres à l'aide de l'indicateur respectif.

2. Procédé selon la revendication 1,
**caractérisé en ce que**
- l'indicateur d'un paquet de données est sa parité (P) ; et
- la parité (P) est jointe au paquet de données (DP) respectif de préférence par l'ajout d'un bit de parité (PB) ;
de sorte que, en fonction de l'état logique du bit de parité (PB) ajouté, le nombre des Uns logiques est complété parmi les bits de données (DB) dans un paquet de données (DP) jusqu'à un nombre pair pour avoir une parité (P) paire du paquet de données (DP) ou jusqu'à un nombre impair pour avoir une parité (P) impaire et les paquets de données (DP) présentent dans le mode de service normal (NM) une autre parité que dans le mode de service test (TM).

3. Procédé selon la revendication 2,
**caractérisé en ce que**
- les paquets de données (DP) présentent une parité (P) impaire dans le mode de service normal (NM) ; et
- les paquets de données (DP) présentent une parité (P) paire dans le mode de service test (TM).

4. Procédé selon la revendication 1,
**caractérisé en ce que**
l'indicateur d'un paquet de données respectif est une somme transversale caractérisante (Checksum), qui est ajoutée au paquet de données (DP) respectif de préférence par l'ajout de plusieurs bits de somme transversale (CB), la somme transversale caractérisante (Checksum) présentant dans le mode de service normal (NM) toujours une autre valeur que dans le mode de service test (TM).

5. Procédé selon l'une quelconque des revendications 1 à 4,
**caractérisé en ce que** la(les) unité(s) de détection (S1, S2), après une mise en route de la tension d'alimentation par l'appareil de commande central (ECU)
- envoie des paquets de données (DP) seulement après l'écoulement d'un temps d'initialisation (tᵢₙᵢ) suite aux impulsions de synchronisation (Sync) demandant des données de l'appareil de commande central (ECU),
- est exploitée après l'écoulement du temps d'initialisation (tᵢₙᵢ) pendant un temps de test (t_{chk}) dans le mode de service test (TM), le temps de test (t_{chk}) durant jusqu'à ce qu'un nombre défini auparavant de paquets de données (DP) ait été transmis ; et
- est exploitée seulement après l'expiration du temps de test (t_{chk}) dans le mode de service normal (NM).

6. Procédé selon l'une quelconque des revendications 1 à 5,
**caractérisé en ce que**
- l'alimentation en tension de l'unité/les unités de détection (S1, S2) et la transmission de données s'effectuent sur seulement une unique ligne de données électriques (PDL) et
- l'appareil de commande central (ECU) envoie à la demande de paquets de données (DP) périodiquement des impulsions de synchronisation (Sync) par la modulation de la tension d'alimentation sur une ligne de données (PDL).

7. Procédé selon l'une quelconque des revendications 1 à 6,
**caractérisé en ce que**
une autre sortie de paquets de données (DP) de l'unité de détection (S1) par une nouvelle impulsion de synchronisation (Sync) ne peut être demandée qu'après un temps de blocage (t_{off}) qui commence avec la dernière impulsion de synchronisation (Sync) détectée et se termine juste avant la prochaine impulsion de synchronisation (Sync).

8. Procédé selon l'une quelconque des revendications 1 à 7,
**caractérisé en ce que**
un premier paquet de données d'une unité de détection (S1) décentralisée est envoyé à l'intérieur d'une durée de période (T₂) des impulsions de synchronisation (Sync) se répétant périodiquement après un premier temps d'attente (t_{dly1}) après l'impulsion de synchronisation (Sync) à l'appareil de commande central (ECU).

9. Procédé selon l'une quelconque des revendications 1 à 8,
**caractérisé en ce que**
un second paquet de données d'une unité de détection (S1) décentralisée est envoyé dans les limites d'une durée de période (T₂) des impulsions de synchronisation (Sync) se répétant périodiquement après un second délai d'attente (t_{dly2}) après l'impulsion de synchronisation (Sync) à l'appareil de commande (S) central et éventuellement d'autres paquets de données (DP) après d'autres délais d'attente correspondants.

10. Procédé selon les revendications 8 et 9,
**caractérisé en ce que**,
le premier et le second paquet de données (DP) et éventuellement d'autres paquets de données (DP) d'une unité de détection (S1, S2) transmettent chacun une valeur qui est déduite de la même valeur mesurée de capteur.

11. Procédé selon l'une quelconque des revendications 8 ou 9,
**caractérisé en ce que**,
le premier et le second paquets de données (DP) et éventuellement d'autres paquets de données (DP) d'une unité de détection (S1) transmettent des valeurs qui sont déduites de valeurs de mesure de capteur respectivement différentes de préférence de deux ou plusieurs valeurs de mesure de capteur présentes et se succédant dans le temps.

12. Procédé selon la revendication 11,
**caractérisé en ce que**,
chaque paquet de données (DP) de plusieurs unités de détection (S1, S2) décentralisées raccordées à la ligne de données n'est envoyé qu' après un délai d' attente (t_{dly1}, t_{dly2}) respectivement différent après l'impulsion de synchronisation (Sync) à l'appareil de commande central (ECU).

13. Procédé selon la revendication 12,
**caractérisé en ce que**,
les unités de détection (S1, S2) enregistrent leurs valeurs mesurées de capteur à la demande de l'impulsion de synchronisation (Sync) de leur capteur respectif, de sorte que les valeurs mesurées de capteur respectives transmises dans les paquets de données (DP) de différentes unités de détection (S1, S2) sont enregistrées dans le cadre de la tolérance de mesure respectivement au même moment.

14. Procédé selon la revendication 13,
**caractérisé en ce que**,
la lecture des valeurs de capteur s'effectue par une numérisation de valeurs mesurées de capteur analogiques présentes.

15. Procédé selon l'une quelconque des revendications 1 à 14,
**caractérisé en ce que**,
les bits de données des paquets de données (DP) transmis sont codés par flan, de préférence avec un codage de Manchester.

16. Procédé selon l'une quelconque des revendications 1 à 15,
**caractérisé en ce que**
un paquet de données (DP) présente le modèle de bit suivant dans le mode de service normal et/ou dans le mode de service test :
- 7 bits de données (DB) pour la transmission des valeurs mesurées de capteur ou des valeurs caractéristiques du capteur ;
- 2 bits de démarrage (SB) ; et
- le bit de parité (PB).

17. Unité de détection (S1, S2) d'un système de protection de passager dans un véhicule (1) pour l'enregistrement de valeurs mesurées de capteur et pour la transmission des valeurs mesurées de capteur à un appareil de commande central (ECU) selon un procédé des revendications 1 à 16, qui présente un capteur (2), une mémoire (3), une unité de commande de capteur (4), une unité de calcul de capteur (5) et une interface de capteur (61, 62), l'unité de commande de capteur (4) et/ou l'unité de calcul de capteur (5) étant appropriée(s) pour demander la sortie de l'indicateur correct d'un paquet de données DP dans chaque mode de service de l'unité de détection (S1, S2).

18. Appareil de commande central (ECU) pour l'utilisation dans un procédé pour la transmission de données selon l'une des revendications 1 à 16, avec une interface d'appareil de commande (8), une unité de calcul d'appareil de commande (9) et une mémoire d'appareils de commande (10),
- une tension d'alimentation pour au moins une unité de détection (S1, S2) pouvant être sortie selon la revendication 17 par l'interface d'appareil de commande (8),
- des impulsions de synchronisation (Sync) pouvant être sorties périodiquement pour la demande de paquets de données (DP) par la au moins une unité de détection (S1, S2) ; et
- des paquets de données (DP) transmis sous la forme d'impulsions de courant pouvant être reçus ;
et l'unité de calcul d' appareil de commande (5) étant appropriée pour la reconnaissance de l'indicateur correct d'un paquet de données DP.

19. Agencement, qui peut être utilisé pour le déroulement d'un procédé pour la transmission de données selon l'une quelconque des revendications 1 à 16, et qui comprend aussi bien une unité de détection (S1, S2) selon la revendication 17 qu'un appareil de commande central (ECU) selon la revendication 18.
